# EUROPÄISCHE PATENTSCHRIFT

(11) **EP 2 229 317 B1**
(45) Veröffentlichungstag und Bekanntmachung des Hinweises auf die Patenterteilung: **04.07.2012**
(21) Anmeldenummer: 08867053.4
(22) Anmeldetag: 30.12.2008
(51) Int. Cl.: B64C 1/12, B64C 1/26

(54) **FLÜGEL-RUMPF-STRUKTURBAUTEIL ZUR VERBINDUNG VON ZWEI TRAGFLÜGELN UND EINER RUMPFSEKTION AN EINEM FLUGZEUG**
WING-FUSELAGE STRUCTURAL COMPONENT FOR THE CONNECTION OF TWO AIRFOILS AND A FUSELAGE SECTION ON AN AIRCRAFT
COMPOSANT STRUCTUREL AILE-FUSELAGE PERMETTANT DE RELIER DEUX AILES PORTANTES ET UNE SECTION DE FUSELAGE À UN AVION

(30) Priorität: 30.12.2007 US 17649 P; 30.12.2007 DE 102007063159
(43) Veröffentlichungstag der Anmeldung: 22.09.2010
(73) Patentinhaber: Airbus Operations GmbH, 21129 Hamburg (DE)
(72) Erfinder: GROSS, Claus-Peter, 21614 Buxtehude (DE)
(74) Vertreter: Schatt, Markus F.
(86) Internationale Anmeldenummer: PCT/EP2008/011152
(87) Internationale Veröffentlichungsnummer: WO 2009/083262

(56) Entgegenhaltungen:
- US-A- 3 735 524
- US-A- 4 875 795
- THOMPSON B E ET AL: "SAILPLANE CARRY-THROUGH STRUCTURES MADE WITH COMPOSITE MATERIALS" JOURNAL OF AIRCRAFT, AIAA, RESTON, VA, US, Bd. 33, Nr. 3, 1. Mai 1996 (1996-05-01), Seiten 596-600, XP000589209 ISSN: 0021-8669

## Beschreibung

Die Erfindung betrifft ein Flügel-Rumpf-Strukturbauteil zur Verbindung von zwei Tragflügeln und einer Rumpfsektion an einem Flugzeug.

Dabei weist jeder der beiden Tragflügel je ein in der Flügeloberschale integriertes oder zu integrierendes Schalenteil auf, wobei die beiden Schalenteile gemeinsam das Flügel-Rumpf-Strukturbauteil bilden.

Dokument US 3 735 524 beschreibt eine Flügelanordnung für ein Spielzeug-Flugzeug, das zwei Flügelhälften mit ineinander eingreifenden inneren Enden aufweist, die auf dem Flugzeugrumpf liegen.

Im Stand der Technik werden Flügel-Rumpfverbindungen bisher durch einen Flügelkasten gebildet. Bei dem Flügelkasten handelt es sich um ein von den Tragflügeln separates Bauteil, das meist aus vielen verschiedenen Teilen gebildet ist, wobei die Teile zur Bildung des Flügelkastens miteinander verschweißt und/oder über Verbindungselemente verbunden sind. In der Regel ist der Flügelkasten aus Metall gefertigt, im Laufe der Zeit kann Korrosion auftreten. Der Flügelkasten weist Verbindungselemente zur Flügel- bzw. Rumpfanbindung auf, die ebenfalls im Regelfall aus Metall hergestellt ist.

Die Anbindungen insbesondere der Tragflügel erfordert einen hohen Montageaufwand, der zu hohen Kosten führt. Nachteilig ist dabei, dass bei der Verbindung zwischen Flügel und Flügelkasten die Last um Ecken geleitet wird, was die Stabilität der Verbindung schwächt und den Lastübergang vom Flügel in den Rumpf ungünstig gestaltet.

Es ist Aufgabe der Erfindung eine Flügel-Rumpfverbindung bei einem Flugzeug herzustellen, die eine einfachere Montage der Tragflügel mit weniger Teilen als bisher ermöglicht.

Diese Aufgabe wird mit den unabhängigen Ansprüchen gelöst. Weitere Ausführungsformen sind in den auf diese rückbezogenen Unteransprüchen angegeben.

Das Flügel-Rumpf-Strukturbauteil dient der Verbindung von zwei Tragflügeln und einer Rumpfsektion eines Flugzeugs, und weist eine Flügeloberschale mit einem ersten Flügel-Oberschalenteil des ersten Flügels und einem zweiten Flügel-Oberschalenteil des zweiten Flügels auf, wobei die beiden Flügel-Oberschalenteile je einstückig hergestellt sind. Das erste und das zweite Flügel-Oberschalenteil sind je aus einem flügelseitigen Schalenteil und einem rumpfseitigem Schalenteil gebildet.

Jedes der rumpfseitigen Schalenteile weist zumindest zwei sich in der Spannweitenrichtung erstreckende Anschlussteile und zumindest zwei von den Anschlussteilen freigegebenen Ausnehmungen auf, wobei die Anschlussteile und die Ausnehmungen derart gestaltet sind, dass diese im zusammengebauten Zustand ineinander greifen, wobei die zumindest zwei Anschlussteile an ihrem dem zugehörigen Flügel fern liegenden Ende jeweils ein sich nach oben erstreckendes Verlängerungsteil aufweisen.

Weiterhin weist das Flügel-Rumpf-Strukturbauteil eine Flügel-Unterschale auf, die mit der Flügeloberschale einen sich quer durch den Rumpf erstreckenden Flügelabschnitt bildet, und ein Rumpf-Oberschalenteil mit einem auf der Seite des ersten Flügels gelegenen ersten Auflagerand und mit einem auf der Seite des zweiten Flügels gelegenen zweiten Auflagerand, wobei der erste Auflagerand Ausnehmungen aufweist, in die jeweils Verlängerungsteile des zweiten Flügels eingreifen und wobei der zweite Auflagerand Ausnehmungen aufweist, in die Verlängerungsteile des ersten Flügels eingreifen.

Die Ausnehmungen an jedem der zwei rumpfseitigen Schalenteile können jeweils zwischen zwei sich zum Beispiel fingerförmigen in Flügel-Spannweitenrichtung erstreckenden Anschlussteilen gebildet sein und/oder neben einem Anschlussbereich, im Randbereich des jeweiligen rumpfseitigen Schalenteils.

Dabei können die Ausnehmungen der beiden rumpfseitigen Schalenteile als Vertiefungen zwischen oder neben jeweils zwei Anschlussteilen gebildet sein, oder die Ausnehmungen sind Öffnungen, in die jeweils ein sich fingerförmig in Flügel-Spannweitenrichtung erstreckendes Verbindungsteil des jeweils anderen rumpfseitigen Schalenteils aufgenommen ist.

Die Ausnehmungen des Rumpf-Oberschalenteils können auch Vertiefungen sein, in die jeweils eine Erhebung eines Verlängerungsteils des jeweilig anderen Rumpf-Oberschalenteils aufgenommen ist.

Egal, wie die Ausnehmungen und die mit ihnen zusammenwirkenden Anschlussteile ausgebildet sind, entscheidend ist, dass sie im verbundenen Zustand derart ineinander greifen und miteinander verbunden sind, dass sie einen Druckschott-Abschnitt gegenüber dem Inneren des Rumpf-Oberschalenteils, das Teil des Flugzeugrumpfes ist, der unter anderem die Fluggastkabine umfasst, bilden.

Die fingerförmigen Anschlussteile können zum Beispiel die Form eines lang gestreckten Rechtecks oder die Form eines Dreiecks, beispielsweise eines gleichschenkligen Dreiecks haben. Sie können quer zur Spannweitenrichtung weisende wellenförmige oder gezackte Seitenkonturen haben, können aber auch amorphe Umfangskonturen aufweisen. Die Ausnehmungen weisen dann jeweils die Negativform des Anschlussteils auf, so dass wenn Anschlussteil und Ausnehmungen ineinander greifen sich immer eine geschlossene Fläche ergibt.

Die Verbindung zwischen den Ausnehmungen und den Anschlussteilen kann dabei zum Beispiel eine Klebe- oder Schweißverbindung sein, ebenso gut kann die Verbindung aber auch über Verbindungselemente, die die Ausnehmungen und die Anschlussteile miteinander sicher verbinden, hergestellt sein. Bei den Verbindungselementen kann es sich beispielsweise um Klammern, Schrauben handeln.

Die Schalenteile haben eine axiale Länge in Richtung der Flugzeuglängsachse, die im Wesentlichen der axialen Länge des Rumpf-Oberschalenteils entsprechen kann. Dabei kann das Rumpf-Oberschalenteil die Form eines offenen Rings aufweisen, wobei die offenen Enden des Rings sich in einer Ebene gegenüberliegen und einen Abstand aufweisen, der im Wesentlichen der Länge der rumpfseitigen Schalenteile in Spannweitenrichtung entspricht. Das Rumpf-Oberschalenteil kann mit den Schalenteilen verklebt, verschweißt oder über Verbindungselemente verbunden werden. Dadurch wird ein Abschnitt der Flugzeugkabine geschaffen, bei dem das Rumpf-Oberschalenteil die obere Außenhaut der Kabine bildet, und die verbundenen Schalenteile eine Auflage für den Kabinenboden. Das bedeutet, dass sowohl die Verbindung zwischen den beiden rumpfseitigen Schalenteilen, als auch die Verbindung zwischen den Schalenteilen und der Rumpf-Oberschale derart gestaltet sein muss, dass eine luftdichte Verbindung entsteht, die den auftretenden Druckunterschieden zwischen Kabineninnendruck und Atmosphären-Außendruck stand hält. Dies kann durch stoffschlüssige Verbindungen, beispielsweise Verkleben oder Verschweißen erreicht werden, oder durch Verbindungselemente, wobei in diesem Fall zusätzliche Dichtemittel notwendig sein können.

Die Flügel-Unterschale kann aus einem ersten Flügel-Unterschalenteil für den ersten Flügel und einem zweiten Flügel-Unterschalenteil für den zweiten Flügel gebildet sein. Dabei können die beiden Flügel-Unterschalenteile an ihren zueinander weisenden rumpfseitigen Enden zum Beispiel Verzahnungselemente aufweisen, mittels derer sie miteinander verbindbar sind. Die Verbindung kann eine Klebeverbindung oder eine Schweißverbindung sein, sie kann aber auch über separate Verbindungselemente hergestellt werden.

Die Flügel-Unterschale kann aber auch in einem Stück gefertigt sein, was eine besonders einfache und schnelle Montage ermöglicht und gleichzeitig die Festigkeit der gesamten Flügelkonstruktion positiv beeinflusst.

Die Verbindung der Flügel-Oberschale mit der Flügel-Unterschale kann über Verbindungselemente hergestellt werden, alternativ kann die Flügel-Oberschale mit der Flügel-Unterschale verklebt, verschweißt oder auf andere Weise fest verbunden sein.

Das Schalenteil und/oder die Flügel-Oberschale können in einem Stück hergestellt sein, das heißt sie werden in einem Arbeitsprozess hergestellt. Dabei können sie aus Verbundwerkstoff, zum Beispiel einem gleichen Verbundwerkstoff hergestellt sein, wobei der Verbundwerkstoff Hauptfasem aufweist, die kontinuierlich zumindest in dem Schalenteil verlegt sind und ohne Unterbrechung von dem flügelseitigen Ende des Schalenteils bis zum rumpfseitigen Ende des Schalenteils verlaufen. Ist die gesamte Flügel-Oberschale in einem Stück hergestellt oder bildet das flügelseitige Schalenteil die Flügel-Oberschale, so können die Hauptfasem kontinuierlich in der Flügel-Oberschale verlegt sein, und ohne Unterbrechung von der Flügel-Oberschalen-Spitze bis zum rumpfseitigen Ende des Schalenteils, das heißt bis an das rumpfseitige Ende der Verlängerungsteile, verlaufen. In beiden Fällen verlaufen die Hauptfasem in dem jeweiligen Bauteil in der Spannweitenrichtung, das heißt im Wesentlichen parallel zu einer Flügellängsachse in Spannweitenrichtung.

Ist zusätzlich auch noch die Flügel-Unterschale aus einem Verbundwerkstoff hergestellt, so kann auch diese Hauptfasern aufweisen, wobei die Hauptfasem kontinuierlich in der Flügel-Unterschale verlegt sind und ohne Unterbrechung von einer Flügel-Unterschalen-Spitze bis zur anderen Flügel-Unterschalen-Spitze verlaufen. Dabei kann es sich um den gleichen Verbundwerkstoff handeln wie bei den Flügel-Oberschalen, es kann aber auch ein anderer Verbundwerkstoff zum Einsatz kommen.

Neben den Hauptfasem kann der Verbundwerkstoff weitere Fasern aufweisen, die beispielsweise im Wesentlichen senkrecht zu den Hauptfasem verlaufen. Weitere Fasern können in beliebigen anderen Winkeln zu den Hauptfasem weitere Bestandteile des Verbundwerkstoffes bilden. Diese anderen Winkel können jeden Wert zwischen 1 ° und 89° haben, insbesondere aber können sie 45° oder 60° betragen. Die Hauptfasem und die weiteren Fasern können miteinander verwoben, verklebt oder vernäht sein und zusammen ein Gelege bilden. Dieses Gelege kann in ein Trägermaterial eingebettet sein.

Die Flügel-Oberschale und die Flügel-Unterschale können gemeinsam einen Flügelkasten bilden. Zumindest ein Holm des Rumpfes kann in der Flügel-Oberschale und/oder der Flügel-Oberschale integriert sein.

Wenn auch das Flügel-Rumpf-Strukturteil hier nur am Beispiel eines Tragflügels beschrieben ist, so kann der Fachmann das beschriebene Prinzip der Anbindung auch auf andere Flügel-Rumpf-Verbindungen anwenden, beispielsweise bei starren Vorflügeln oder Heckflügeln.

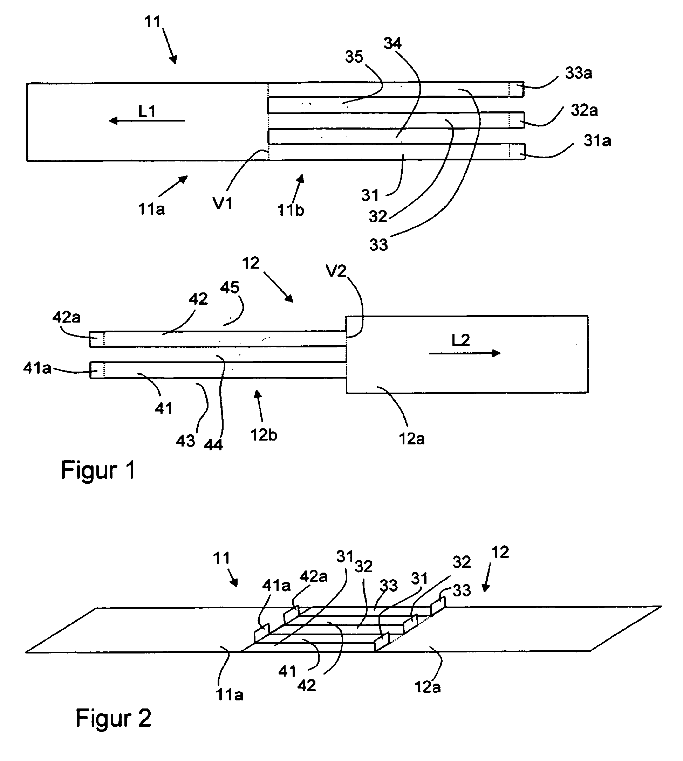

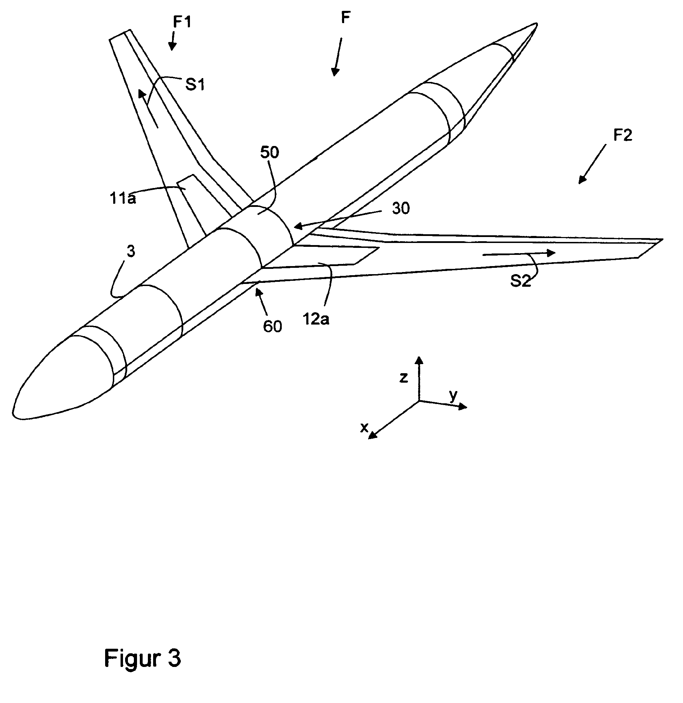

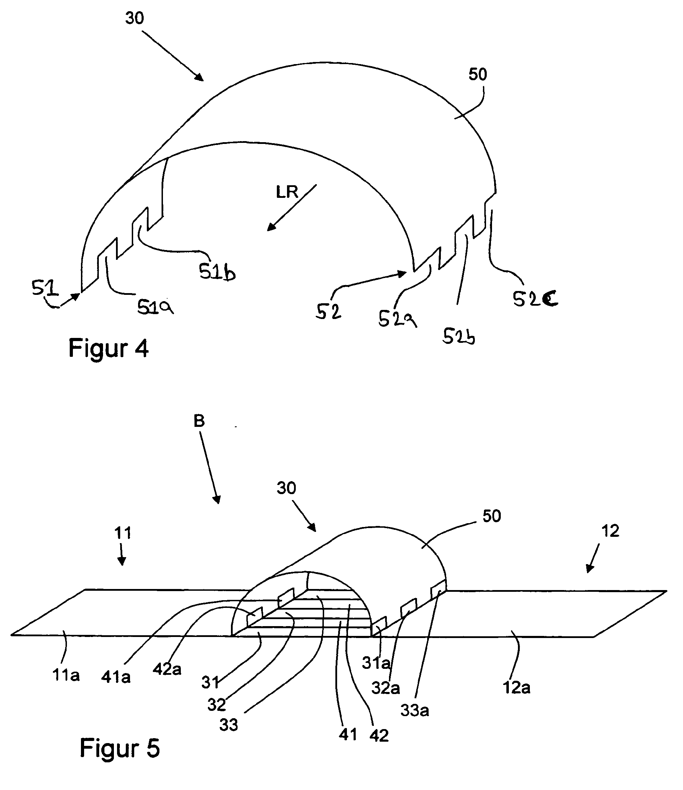

Im Folgenden werden Ausführungsbeispiele der Erfindung anhand schematischer Zeichnungen näher erläutert. Es zeigen:
■ Figur 1 eine schematische Draufsicht-Darstellung von zwei nach der Erfindung vorgesehenen komplementären Flügelschalen-Oberteilen jeweils einer Flügel-Oberschale eines Tragflügels, wobei deren Verlängerungsteile zur Veranschaulichung in die Betrachtungsebene umgelegt sind,
■ Figur 2 eine schematische Darstellung von Flügelschalen-Oberteilen zweier Flügel-Oberschalen zweier Tragflügel, im zusammengefügten Zustand,
■ Figur 3 die Einbausituation der Flügelschalen-Oberteile am Flugzeug,
■ Figur 4 ein nach der Erfindung vorgesehenes Rumpf-Oberschalenteil,
■ Figur 5 eine schematische Darstellung einer Anordnung aus dem Rumpf-Oberschalenteil nach der Figur 4 mit zwei komplementär nach der Figur 2 zusammengefügten Flügelschalen-Oberteilen.

In der nachfolgenden Beschreibung und in den Figuren werden zur Vermeidung von Wiederholungen gleiche Bauteile und Komponenten zumindest teilweise auch mit gleichen Bezugszeichen gekennzeichnet, sofern für die Beschreibung keine weitere Differenzierung erforderlich ist.

Nach der Erfindung ist ein Flügel-Rumpf-Strukturbauteil B zur Verbindung von zwei Flügelschalen-Oberteilen 11,12, die jeweils einem der zwei Tragflügel F1, F2 zugeordnet werden, mit einem Rumpf-Schalenteil 30 oder Rumpf-Oberschalenteil 50 oder Rumpf-Unterschalenteil einer Rumpfsektion 3 eines Flugzeugs. Die Figur 1 zeigt ein Ausführungsbeispiel eines erfindungsgemäßen Flügelschalen-Oberteils 11 mit einer Längsrichtung L1. Das Flügelschalen-Oberteil 11 wird bestimmungsgemäß derart in den Flügel F1 integriert, dass die Längsrichtung L1 in der Spannweitenrichtung S1 des Flügels F1 verläuft. Das Flügeischalen-Oberteil 11 weist zwei Teilabschnitte auf, ein flügelseitiges Schalenteil 11 a und rumpfseitiges Schalenteil 11 b, die in der Längsrichtung L1 gesehen hintereinander angeordnet sind.

Die beiden Schalenteile 11 a, 11 b sind einstückig gebildet oder in einem Stück gefertigt. Die Längsrichtung L1 weist vom rumpfseitigen Schalenteil 11 b zum flügelseitigen Schalenteil 11a und kann je nach der Gestalt des Schalenteils 11 a, 11 b auch gekrümmt verlaufen. Im Bereich des Übergangs des flügelseitigen Schalenteils 11a in das rumpfseitige Schalenteil 11b bilden die beiden Schalenteile 11a, 11 b an einer gedachten Verbindungslinie einen stumpfen Winkel. Die Größe dieses stumpfen Winkels ist abhängig von der Anbausituation des Flügelschalen-Oberteils 11 bzw. des Tragflügels F1, F2. Bei anderen Ausführungsformen tritt zwischen dem rumpfseitigen Schalenteil 11b und dem flügelseitigen Schalenteil 11a kein Winkel auf. Insbesondere kann die Längsrichtung von dem rumpfseitigen Schalenteil 11 b zum flügelseitigen Schalenteil 11a kontinuierlich und/oder mit derselben Krümmungsrichtung verlaufen, d.h. der Winkel kann auch 180 Grad sein.

Das flügelseitige Schalenteil 11 a hat die Form eines geschlossenen Vierecks, das rumpfseitige Schalenteil 11 b weist dagegen im Ausführungsbeispiel die Form eines Gabel-Endes mit drei fingerförmigen Anschlussteilen 31, 32, 33 in Form von gestreckten Rechtecken auf, die zwischen sich zwei Ausnehmungen 34, 35 in der Form von Öffnungen bilden, und ebenfalls die Form gestreckter Rechtecke haben. Die Anschlussteile 31, 32, 33 und die Ausnehmungen 34, 35 erstrecken sich z.B. jeweils von der gedachten Verbindungslinie V1 bis zum rumpfseitigen Ende des rumpfseitigen Schalenteils 11 b. Es kann aber auch genügen, wenn sich die Anschlussteile 31, 32, 33 und die Ausnehmungen 34, 35 nur über einen Teil der Länge des rumpfseitigen Schalenteils in der Spannweitenrichtung erstrecken. Ebenso müssen die fingerförmigen Anschlussteile 31, 32, 33 und Ausnehmungen 34, 35 nicht als Rechtecke geformt sein, sie können ebenso gut eine Dreiecksform oder jede andere Form aufweisen. Dabei beeinflusst die Formgebung der Anschlussteile 31, 32, 33 die Form der Ausnehmungen 34, 35 und umgekehrt.

Auch die Anzahl der Anschlussteile und Ausnehmungen kann variieren. So kann das rumpfseitige Schalenteil 11b aus nur jeweils einem Anschlussteil und einer Ausnehmung bestehen, die dann in Axialrichtung des Flugzeugrumpfes nebeneinander angeordnet sind. Die maximale Anzahl von Anschlussteilen und Ausnehmungen ist durch konstruktive Vorgaben begrenzt. Dabei können die Anschlussteile und Ausnehmungen anders als in Figur 1 dargestellt auch alternativ oder zusätzlich an quer zur Längsrichtung L1 gerichteten Rändern des rumpfseitigen Schalenteils 11b ausgebildet sein. Schließlich kann das rumpfseitige Schalenteil 11 b auch eine beliebige Form, beispielsweise die Form eines Kreuzes aufweisen, wobei das Kreuz in diesem Fall das Anschlussteil eines ersten Flügelschalenteils bildet, und die Ausnehmung des anderen Flügelschalenteils eine Form aufweist, in die das durch die Umgebung des Anschlussteils in der Ebene des Anschlussteils gebildet wird. Umgekehrt kann auch das Kreuz als Ausnehmung in dem rumpfseitigen Schalenteil 11 b gebildet sein.

Die zumindest eine Ausnehmung 34, 35 des rumpfseitigen Schalenteils 11 b kann auch eine Vertiefung sein, in die jeweils eine Erhebung eines Verlängerungsteils des jeweils anderen rumpfseitigen Schalenteils aufgenommen ist. Dabei können die Ausnehmungen sowohl als durchgehende Löcher jeglicher Form ausgebildet sein, oder in das Material des rumpfseitigen Schalenteils nur über einen Teilbereich der Materialdicke hineinreichen, das heißt, nicht durchgängig sein. Dabei können alle Ausnehmungen an einem rumpfseitigen Schalenteil und die Anschlussteile am anderen rumpfseitigen Schalenteil gebildet sein, oder jedes der beiden rumpfseitigen Schalenteile weist sowohl Ausnehmungen in Form von Vertiefungen und Anschlussteile in Form von in Verbindungsrichtung abstehenden Anschlussteilen auf. Sind die Ausnehmungen als Löcher gebildet, so können die beiden zu verbindenden rumpfseitigen Anschlussteile zur Herstellung der Verbindung aufeinander liegen, das heißt im Bereich der Verbindung weist das Schalenteil im verbundenen Zustand eine senkrecht zur Kabinenebene des Flugzeugs gemessene Dicke auf, die der Dicke der Grundkörper, das heißt, ohne Ausnehmungen bzw. Anschlussteile, der beiden rumpfseitigen Schalenteile entspricht. Die Anschlussteile können dabei um ein Maß vom Grundkörper des rumpfseitigen Schalenteils, auf dem diese gebildet sind, wegragen, das im Wesentlichen der Dicke des diese aufnehmenden rumpfseitigen Schalenteils 11 b entspricht.

Das Flügel-Oberschalenteil 11 kann aus einem Verbundwerkstoff gefertigt sein, mit nicht gezeigten Hauptfasem, die einen kontinuierlichen Verlauf über die gesamte Länge des Flügel-Oberschalenteils 11 haben, das heißt, die Hauptfasern verlaufen ohne Unterbrechung von dem flügelseitigen Ende des Flügel-Oberschalenteils 11 bis zu dem rumpfseitigen Ende des Flügel-Oberschalenteils 11. Neben den Hauptfasern können weiter nicht gezeigte Fasern, die beispielsweise senkrecht zu den Hauptfasem oder in einem beliebigen anderen Winkel zu den Hauptfasern verlaufen, Bestandteil des Verbundwerkstoffes sein. Das Flügel-Oberschalenteil 11 kann dabei Teil einer Flügel-Oberschale 10 sein, oder selbst die Flügeloberschale 10 bilden.

An den Anschlussteilen 31, 32, 33 des Flügel-Oberschalenteils 11 in Figur 1 sind an den rumpfseitigen Enden sich in ihrer Längsrichtung winklig zur Erstreckung der Anordnung der ineinander greifenden rumpfseitigen Schalenteile 11b, 12b erstreckende Verlängerungsteile 31 a, 32a, 33a gebildet, deren Sinn im Zusammenhang mit der Figur 5 näher erläutert wird. Die rumpfseitigen Enden dieser Verlängerungsteile 31a, 32a, 33a sind identisch mit den rumpfseitigen Enden der Anschlussteile 31, 32, 33. In dem in den Figuren gezeigten Ausführungsbeispiel ragen die Verlängerungsteile 31 a, 32a, 33a gegenüber der Erstreckung des übrigen Teils der rumpfseitigen Schalenteile 11 b, 12b winklig nach oben.

Die Figur 2 zeigt zwei Flügel-Oberschalenteile 11, 12 im bestimmungsgemäß zusammen gesetzten oder zusammen gebauten Zustand, wobei die Anschlussteile 31, 32, 33 des rumpfseitigen Schalenteils 11 b des ersten Flügelschalenteils 11 in die Ausnehmungen 43, 44, 45 des rumpfseitigen Schalenteils 12b des zweiten Flügelschalenteils 12, und die Anschlussteile 41, 42 des rumpfseitigen Schalenteils 12b des zweiten Flügelschalenteils 12 in die Ausnehmungen 34, 35 des rumpfseitigen Schalenteils 11b des ersten Flügelschalenteils 11 eingreifen oder in diesen gelegen sind. Die beiden ineinander greifenden rumpfseitigen Schalenteile 11 b, 12b können zur festen Verbindung der beiden Flügel-Oberschalenteile 11, 12 miteinander verklebt, verschweißt, über Verbindungselemente oder auf andere Weise lösbar oder unlösbar verbunden werden.

In der Figur 3 werden die Flügel-Oberschalenteile 11, 12 in der Einbausituation am Flugzeug gezeigt, wobei nur die für den Einbau wesentlichen Teile gezeigt sind. Jedes der zwei Flügel-Oberschalenteile 11, 12 ist jeweils mit einem flügelseitigen Schalenteil 11 a, 12a verbunden. Die beiden rumpfseitigen Schalenteile 11 b, 12b der Flügel-Oberschalenteile 11, 12 sind miteinander wie oben beschrieben verbunden, und liegen in dem Verbindungsbereich auf einer nicht bezeichneten Rumpfunterschale auf. Dabei ist die Rumpfunterschale über Verbindungselemente oder alternative Befestigungen mit den rumpfseitigen Schalenteilen verbunden. Die Rumpfschale kann einen Keal Beam, einen Fahrwerkschacht und ein Druckschott aufweisen, das sich an den Verbindungsbereich der Flügel-Oberschalenteile 11, 12 in Richtung des Hecks des Flugzeuges anschließt.

Die Tragflügel 1, 2 weisen zusätzlich zu der Flügel-Oberschale 10 eine Flügel-Unterschale 20 auf. Flügel-Oberschale 10 und Flügel-Unterschale 20 bilden im Ausführungsbeispiel einen zentralen Flügelkasten. Die verbundenen rumpfseitigen Schalenteile 11b, 12b bilden einen in Axialrichtung des Flugzeuges vorderen Teil des Druckschotts.

In Figur 4 ist ein Rumpf-Oberschalenteil 50 dargestellt, das für eine Verbindung mit den Flügel-Oberschalenteilen 11, 12 hergerichtet ist. Das Rumpf-Oberschalenteil weist die Form eines unterbrochenen Ringes auf. Das Rumpf-Oberschalenteil 50 ist somit ein teilzylindrisches Rumpf-Schalenteil 30 mit zwei quer zu seiner Längsrichtung gerichteten und jeweils entgegen gesetzt zueinander gelegenen Auflagerändern. Die beiden Enden oder Auflageränder des offenen Rings liegen sich in einer Ebene gegenüber, der Abstand der beiden Enden entspricht im dargestellten Ausführungsbeispiel im Wesentlichen der in Spannweitenrichtung gemessenen Länge der rumpfseitigen Schalenteile 11 b, 12b, bzw. des durch die rumpfseitigen Schalenteile 11 b, 12b gebildeten Verbindungsbereich.

Das Rumpf-Oberschalenteil 30 weist im zusammengebauten Zustand einen auf der Seite des ersten Flügelschalenteils 11 gelegenen ersten Auflagerand 51 und einen auf der Seite des zweiten Flügelschalenteils 12 gelegenen zweiten Auflagerand 52, wobei der erste Auflagerand 51 Ausnehmungen 51a, 51b aufweist, in die jeweils Verlängerungsteile des zweiten Flügels eingreifen und wobei der zweite Auflagerand 52 Ausnehmungen 52a, 52b, 52c aufweist, in die Verlängerungsteile des ersten Flügels F1 eingreifen.

An einem der Enden des offenen Kreises, das einen ersten Auflagerand 51 bildet, sind zwei Ausnehmungen 51 a, 51 b gebildet, an dem gegenüberliegenden Ende, das einen zweiten Auflagerand 52 bildet, sind drei Ausnehmungen 52a, 52b, 52c gebildet. In diese Ausnehmungen 51a, 51b; 52a, 52b, 52c können die an den rumpfseitigen Enden der Anschlussteile 31, 32, 33; 41, 42 gebildeten Verlängerungsteile 31 a, 32a, 33a; 41 a, 42a formschlüssig eingreifen. Dadurch wird das Rumpf-Oberschalenteil 30 mit den Flügel-Oberschalenteilen 11, 12 verbunden. Die ineinander greifenden Ausnehmungen 51 a, 51 b; 52a, 52b, 52c und Anschlussteile 31, 32, 33; 41, 42 können im Eingriffsbereich und entlang des ersten Auflagerandes und des zweiten Auflagerandes miteinander lösbar oder unlösbar verbunden, beispielsweise verklebt, verschweißt, über Verbindungselemente oder alternative Befestigungsmethoden verbunden werden.

Die Figur 5 ist eine schematische Darstellung einer Anordnung aus dem Rumpf-Oberschalenteil nach der Figur 4 mit zwei komplementär nach der Figur 2 zusammengefügten Flügelschalen-Oberteilen und die Figur 3 zeigt das Flügel-Rumpf-Strukturbauteil B eingebaut in einem Flugzeug. Die Tragflügel F1, F2 die über die Flügel-Oberschalenteile 11, 12 verbunden sind, und das Rumpf-Oberschalenteil 50, das ebenfalls mit den Flügel-Oberschalenteilen 11, 12 verbunden ist, bilden eine Einheit. Die Verbindungen zwischen den Flügel-Oberschalenteilen 11, 12 ist einfach und sicher herzustellen, die Anzahl der notwendigen Verbindungselemente ist abhängig von der Verbindungsart. Werden die Flügel-Oberschalenteile 11, 12 beispielsweise miteinander verklebt, kann auf zusätzliche Verbindungsteile eventuell sogar gänzlich verzichtet werden. Dies gilt ebenso auch für die Anbindung des Rumpf-Oberschalenteils 30 an die Flügeloberschalenteile 11, 12.

Statt eines Rumpf-Oberschalenteils 50 kann auch ein Rumpf-Unterschalenteil 60 verwendet werden, das in dem mit der Flugzeugstruktur integrierten Zustand entgegengesetzt zu dem Rumpf-Oberschalenteil 50 liegt, so dass allgemein ein Rumpf-Schalenteil 30 verwendet wird.

## Patentansprüche

1. Flügel-Rumpf-Strukturbauteil (B) zur Verbindung von zwei Tragflügeln (F1, F2) und einer Rumpfsektion (3) eines Flugzeugs, aufweisend:
■ ein erstes Flügelschalenteil (11) für den ersten Flügel (F1) und ein zweites Flügelschalenteil (12) für den zweiten Flügel, die jeweils einstückig hergestellt sind und aus einem flügelseitigen Schalenteil (11a, 12a) und einem rumpfseitigen Schalenteil (11 b, 12b) gebildet sind, wobei die Integration des flügelseitigen Schalenteils (11a, 12a) in den jeweiligen Flügel (F1, F2) derart vorgesehen ist, dass eine Längsrichtung (L1, L2) des jeweiligen flügelseitigen Schalenteils (11a, 12a) in Spannweitenrichtung (S) des jeweiligen Flügels verläuft,
wobei jedes rumpfseitige Schalenteil (11 b, 12b) zumindest zwei sich entgegen der Längsrichtung (L1, L2) erstreckende Anschlussteile (31, 32, 33; 41, 42) und zumindest zwei jeweils zwischen den Anschlussteilen gelegene Ausnehmungen (34, 35; 43, 44, 45) aufweist, wobei die Anschlussteile und die Ausnehmungen derart gestaltet sind, dass die Anschlussteile und die Ausnehmungen des rumpfseitigen Schalenteils (11b, 12b) für den ersten Flügel (F1) und des rumpfseitigen Schalenteils (11b, 12b) für den zweiten Flügel (F2) im zusammengebauten Zustand ineinander greifen, und
wobei zumindest zwei Anschlussteile (31, 32, 33; 41, 42) an ihrem dem flügelseitigen Schalenteil (11a, 12a) femliegenden Ende jeweils ein sich winklig zur Längsrichtung (L1, L2) erstreckendes Verlängerungsteil (31a, 32a, 33a; 41a, 42a) aufweist,
• ein Rumpf-Schalenteil (30) mit zwei quer zu seiner Längsrichtung gerichteten und jeweils entgegengesetzt zueinander gelegenen Auflagerändem, wobei der erste, am flügelseitigen Schalenteil (11a, 12a) des ersten Flügels (1) gelegene Auflagerand (51) Ausnehmungen (51 a, 51 b) aufweist, in die jeweils Verlängerungsteile des zweiten Flügelschalenteils (12) eingreifen und wobei der zweite Auflagerand (52) Ausnehmungen (52a, 52b, 52c) aufweist, in die Verlängerungsteile des ersten Flügelschalenteils (11) eingreifen.

2. Flügel-Rumpf-Strukturbauteil (B) nach dem Anspruch 1, **dadurch gekennzeichnet, dass** die Flügelschalenteile (11, 12) Flügel-Oberschalenteile (11, 12) oder Flügel-Unterschalenteile sind.

3. Flügel-Rumpf-Strukturbauteil (B) nach einem der voranstehenden Ansprüche, **dadurch gekennzeichnet, dass** eine Flügel-Unterschale (20) vorgesehen ist, die mit den Flügel-Oberschalenteilen einen sich quer durch den Rumpf erstreckenden Flügelabschnitt bildet.

4. Flügel-Rumpf-Strukturbauteil (B) nach einem der voranstehenden Ansprüche, **dadurch gekennzeichnet, dass** das Rumpf-Schalenteil (30) ein Rumpf-Oberschalenteil (50) ist.

5. Flügel-Rumpf-Strukturbauteil (B) nach einem der voranstehenden Ansprüche, **dadurch gekennzeichnet, dass** die Ausnehmungen (34, 35; 43, 44, 45) Öffnungen sind, die zur Seite der rumpfseitigen Schalenteile (11 b, 12b) entgegengesetzt liegenden Seite offen sind, und die sich zwischen jeweils zwei sich fingerförmig in Längsrichtung erstreckenden Anschlussteilen (31, 32, 33; 41, 42) und/oder neben einem Anschlussteil (31, 32, 33; 41, 42) im Randbereich des jeweiligen rumpfseitigen Schalenteils (11b, 12b) erstrecken

6. Flügel-Rumpf-Strukturbauteil (B) nach einem der voranstehenden Ansprüche 1 bis 4, **dadurch gekennzeichnet, dass** die Ausnehmungen (34, 35; 43, 44, 45) des rumpfseitigen Schalenteils (11b, 12b) Vertiefungen zwischen jeweils zwei Anschlussteilen (31, 32, 33; 41, 42) sind.

7. Flügel-Rumpf-Strukturbauteil (B) nach einem der voranstehenden Ansprüche, **dadurch gekennzeichnet, dass** die Ausnehmungen (51a, 51 b; 52a, 52b, 52c) des Rumpf-Oberschalenteils (50) Öffnungen sind,

8. Flügel-Rumpf-Strukturbauteil (B) nach einem der voranstehenden Ansprüche, **dadurch gekennzeichnet, dass** die Ausnehmungen (51 a, 51b; 52a, 52b, 52c) des Rumpf-Oberschalenteils (50) Vertiefungen sind, in die jeweils zumindest ein Abschnitt eines Verlängerungsteils (31 a, 32a, 33a) aufgenommen sind.

9. Flügel-Rumpf-Strukturbauteil (B) nach einem der voranstehenden Ansprüche, **dadurch gekennzeichnet, dass** die die Ausnehmungen (51 a, 51b; 52a, 52b, 52c) und die Anschlussteile (31, 32, 33; 41, 42) derart ineinander greifen und miteinander verbunden sind, dass diese ein Druckschott-Abschnitt gegenüber dem Inneren des Rumpf-Oberschalenteils (50) bilden.

## Claims

1. A structural wing-fuselage component (B) for connecting two aerofoils (F1, F2) to a fuselage section (3) of an aircraft, comprising:
■ a first wing shell component (11) for the first wing (F1) and a second wing shell component (12) for the second wing, with each component being made in a single piece and comprising a shell component (11a, 12a) on the wing side and a shell component (11b, 12b) on the fuselage side, wherein integration of the shell component (11a, 12a) on the wing side in the respective wing (F1, F2) is provided such that a longitudinal direction (L1, L2) of the respective shell component (11a, 12a) on the wing side extends in the direction of the wingspan (S) of the respective wing;
wherein each shell component (11b, 12b) on the fuselage side comprises at least two coupling parts (31, 32, 33; 41, 42) that extend opposite to the longitudinal direction (L1, L2), and at least two recesses (34, 35; 43, 44, 45) in each case situated between the coupling parts, wherein the coupling parts and the recesses are designed in such a manner that in the installed state the coupling parts and the recesses of the shell component (11b, 12b) on the fuselage side for the first wing (F1) and of the shell component (11b, 12b) on the fuselage side for the second wing (F2) interlock; and
wherein at least two coupling parts (31, 32, 33; 41, 42) at their ends pointing away from the shell component (11a, 12a) on the wing side each comprises an extension part (31 a, 32a, 33a; 41 a, 42a) that extends at an angle to the longitudinal direction (L1, L2),
■ a fuselage shell component (30) with two supporting rims that are aligned transversely to its longitudinal direction and that are situated opposite each other, wherein the first supporting rim (51), on the shell component (11a, 12a) located on the wing side of the first wing (1), comprises recesses (51 a, 51 b) which in each case are engaged by extension parts of the second wing shell component (12), and wherein the second supporting rim (52) comprises recesses (52a, 52b, 52c) which are engaged by extension parts of the first wing shell component (11).

2. The structural wing-fuselage component (B) according to claim 1, **characterised in that** the wing shell components (11, 12) are upper shell components (11, 12) of the wing or lower shell components of the wing.

3. The structural wing-fuselage component (B) according to one of the preceding claims, **characterised in that** a lower shell (20) of the wing is provided which together with the upper shell components of the wing forms a wing section that extends transversely through the fuselage.

4. The structural wing-fuselage component (B) according to any one of the preceding claims, **characterised in that** the fuselage shell component (30) is an upper shell component (50) of the fuselage.

5. The structural wing-fuselage component (B) according to any one of the preceding claims, **characterised in that** the recesses (34, 35; 43, 44, 45) are openings that are open on the side opposite the shell components (11b, 12b) on the fuselage side, and that in each case extend between two coupling parts (31, 32, 33; 41, 42) that extend in a finger-shaped manner in longitudinal direction, and/or beside a coupling part (31, 32, 33; 41, 42) in the rim region of the respective shell component (11b, 12b) on the fuselage side.

6. The structural wing-fuselage component (B) according to any one of the preceding claims 1 to 4, **characterised in that** the recesses (34, 35; 43, 44, 45) of the shell component (11b, 12b) on the fuselage side are indentations in each case between two coupling parts (31, 32, 33; 41, 42).

7. The structural wing-fuselage component (B) according to any one of the preceding claims, **characterised in that** the recesses (51 a, 51 b; 52a, 52b, 52c) of the upper shell component (50) of the fuselage are openings.

8. The structural wing-fuselage component (B) according to any one of the preceding claims, **characterised in that** the recesses (51 a, 51b; 52a, 52b, 52c) of the upper shell component (50) of the fuselage are indentations which in each case receive at least one section of an extension part (31 a, 32a, 33a).

9. The structural wing-fuselage component (B) according to any one of the preceding claims, **characterised in that** the recesses (51 a, 51b; 52a, 52b, 52c) and the coupling parts (31, 32, 33; 41, 42) interlock and are interconnected in such a manner that they form a pressure bulkhead section vis-à-vis the interior of the upper shell component (50) of the fuselage.

## Revendications

1. Composant structurel aile-fuselage (B) permettant de relier deux ailes portantes (F1, F2) et une section de fuselage (3) à un avion, présentent :
- une première pièce d'enveloppe d'aile (11) pour la première aile (F1) et une deuxième pièce d'enveloppe d'aile (12) pour la deuxième aile, qui sont fabriquées toutes deux de manière monobloc et sont formées d'une pièce d'enveloppe côté aile (11a, 12a) et d'une pièce d'enveloppe côté fuselage (11b, 12b), sachant que l'intégration de la pièce d'enveloppe côté aile (11a, 12a) dans l'aile respective (F1, F2) est ainsi prévue qu'un sens longitudinal (L1, L2) de la pièce d'enveloppe côté aile (11a, 12a) respective s'étend dans le sens d'envergure (S) de l'aile respective,
sachant que chaque pièce d'enveloppe côté fuselage (11b, 12b) présente au moins deux pièces de connexion (31, 32, 33 ; 41, 42) s'étendant contre le sens longitudinal (L1, L2) et au moins deux évidements (34, 35 ; 43, 44, 45) placés entre les pièces de connexion, sachant que les pièces de connexion et les évidements de la pièce d'enveloppe d'aile côté fuselage (11b, 12b) pour la première aile (F1) et de la deuxième pièce d'enveloppe d'aile côté fuselage (11b, 12b) pour la deuxième aile (F2) se mettent en prise l'une dans l'autre dans l'état monté, et
sachant qu'au moins deux pièces de connexion (31, 32, 33 ; 41, 42) présentent sur leur extrémité éloignée de la pièce d'enveloppe côté aile (11a, 12a) respectivement une pièce de rallonge (31a, 32a, 33a ; 41a, 42a) s'étendant de manière angulaire par rapport au sens longitudinal (L1, L2),
- une pièce d'enveloppe de fuselage (30) comprenant deux bords d'appui dirigés transversalement à son sens longitudinal et placés respectivement opposés l'un à l'autre, sachant que le premier bord d'appui (51) placé sur la pièce d'enveloppe côté aile (11a, 12a) de la première aile (F1) présente des évidements (51a, 51b) dans lesquels respectivement des pièces de rallonge de la deuxième pièce d'enveloppe d'aile (12) se mettent en prise, et sachant que le deuxième bord d'appui (52) présente des évidements (52a, 52b, 52c) dans lesquels des pièces de rallonge de la première pièce d'enveloppe d'aile (11) se mettent en prise.

2. Composant structurel aile-fuselage (B) selon la revendication 1, **caractérisé en ce que** les pièces d'enveloppe d'aile (11, 12) sont des pièces d'enveloppe supérieure d'aile (11, 12) ou des pièces d'enveloppe inférieure d'aile.

3. Composant structurel aile-fuselage (B) selon la revendication 1 ou 2, **caractérisé en ce qu'**une enveloppe inférieure d'aile (20) est prévue qui forme, avec les pièces d'enveloppe supérieure d'aile, une section d'aile s'étendant transversalement à travers le fuselage.

4. Composant structurel aile-fuselage (B) selon l'une des revendications précédentes, **caractérisé en ce que** la pièce d'enveloppe de fuselage (30) est une pièce d'enveloppe supérieure de fuselage (50).

5. Composant structurel aile-fuselage (B) selon l'une des revendications précédentes, **caractérisé en ce que** les évidements (34, 35 ; 43, 44, 45) sont des ouvertures qui sont ouvertes à l'écart du côté placé opposé aux pièces d'enveloppe côté fuselage (11b, 12b) et qui s'étendent entre respectivement deux pièces de connexion (31, 32, 33 ; 41, 42) s'étendant en forme de doigt dans le sens longitudinal et/ou à côté d'une pièce de connexion (31, 32, 33 ; 41, 42) au niveau du bord de la pièce d'enveloppe côté fuselage (11b, 12b) respective.

6. Composant structurel aile-fuselage (B) selon l'une des revendications précédentes 1 à 4, **caractérisé en ce que** les évidements (34, 35 ; 43, 44, 45) de la pièce d'enveloppe côté fuselage (11b, 12b) sont des renfoncements entre respectivement deux pièces de connexion (31, 32, 33 ; 41, 42).

7. Composant structurel aile-fuselage (B) selon l'une des revendications précédentes, **caractérisé en ce que** les évidements (51a, 51b ; 52a, 52b, 52c) de la pièce d'enveloppe supérieure de fuselage (50), sont des ouvertures.

8. Composant structurel aile-fuselage (B) selon l'une des revendications précédentes, **caractérisé en ce que** les évidements (51a, 51b ; 52a, 52b, 52c) de la pièce d'enveloppe supérieure de fuselage (50), sont des renfoncements dans lesquels respectivement au moins une section de la pièce de rallonge (31a, 32a, 33a) est reçue.

9. Composant structurel aile-fuselage (B) selon l'une des revendications précédentes, **caractérisé en ce que** les évidements (51a, 51b ; 52a, 52b, 52c) et les pièces de connexion (31, 32, 33 ; 41, 42) se mettent en prise les uns dans les autres et sont reliés entre eux de telle sorte que ceux-ci forment une section de cloison étanche par rapport à l'intérieur de la pièce d'enveloppe supérieure de fuselage (50).
